# EUROPÄISCHE PATENTSCHRIFT

(11) **EP 4 301 650 B1**
(45) Veröffentlichungstag und Bekanntmachung des Hinweises auf die Patenterteilung: **23.10.2024**
(21) Anmeldenummer: 22719234.1
(22) Anmeldetag: 25.03.2022
(51) Int. Cl.: B62D 1/19

(54) **FAHRZEUG MIT EINER LENKRADANORDNUNG**
VEHICLE WITH A STEERING WHEEL ARRANGEMENT
VÉHICULE ÉQUIPÉ D'UN ENSEMBLE DE VOLANT

(30) Priorität: 30.04.2021 DE 102021002297
(43) Veröffentlichungstag der Anmeldung: 10.01.2024
(73) Patentinhaber: Mercedes-Benz Group AG, 70372 Stuttgart (DE)
(72) Erfinder: BUGARCIC, Dejan, 73529 Schwäbisch Gmünd (DE); GÄRTNER, Eric, 72160 Horb (DE); KURBASIC, Robert, 71065 Sindelfingen (DE)
(74) Vertreter: Novagraaf Group
(86) Internationale Anmeldenummer: PCT/EP2022/058002
(87) Internationale Veröffentlichungsnummer: WO 2022/228795

(56) Entgegenhaltungen:
- DE-A1- 102005 055 743
- DE-A1- 102018 200 436
- DE-A1- 19 860 804
- DE-B3- 102021 002 297

## Beschreibung

Die Erfindung betrifft ein Fahrzeug mit einer Lenkradanordnung, umfassend eine Steuereinheit und ein an einer Lenksäule angeordnetes, mit der Steuereinheit verbundenes, von einer Lenkstellung in eine Sicherheitsstellung positionierbares Lenkrad.

Aus der DE 198 60 804 A1 ist eine Anordnung eines Fahrerairbags in einem Kraftfahrzeug mit einer Schalttafel und einem Lenkrad bekannt. Wenigstens ein gefalteter Fahrerairbag ist in der Schalttafel verbaut, der mittels eines Gasgenerators befüllbar und durch eine Airbagaustrittsöffnung der Schalttafel vor dem Fahrer entfaltbar ist.

Aus der DE 10 2018 200 463 A1 ist bekannt, dass ein Lenkrad eines Fahrzeugs mittels einer Vibrationseinheit in Vibration versetzt werden kann, um hierdurch eine haptische Warnung an einen Fahrer des Fahrzeugs auszugeben.

Der Erfindung liegt die Aufgabe zugrunde, ein Fahrzeug mit einer Lenkradanordnung anzugeben.

Die Aufgabe wird erfindungsgemäß durch ein Fahrzeug gelöst, welches die in Anspruch 1 angegebenen Merkmale aufweist.

Vorteilhafte Ausgestaltungen der Erfindung sind Gegenstand der Unteransprüche.

Ein Fahrzeug weist eine Lenkradanordnung auf, welche eine Steuereinheit und ein an einer Lenksäule angeordnetes, mit der Steuereinheit verbundenes, von einer Lenkstellung in eine Sicherheitsstellung positionierbares Lenkrad umfasst. Erfindungsgemäß umfasst die Lenkradanordnung eine mit der Steuereinheit verbundene Verstelleinheit zumindest zur Positionierung des an der Lenksäule angeordneten Lenkrades von der Lenkstellung in die Sicherheitsstellung. Zudem ist die Lenkradanordnung ausgebildet, bei einer Positionierung von der Lenkstellung in die Sicherheitsstellung zu vibrieren.

Mittels Vibrierens der Lenkradanordnung, insbesondere des Lenkrades, bei Positionierung desselben von der Lenkstellung in die Sicherheitsstellung wird ein Fahrzeugnutzer, insbesondere ein Fahrer des Fahrzeuges, darauf aufmerksam gemacht, seine Hände von dem Lenkrad zu lösen. Dadurch kann weitestgehend vermieden werden, dass der Fahrzeugnutzer, wenn dieser das Lenkrad mit seinen Händen festhält, bei der Positionierung des Lenkrades in die Sicherheitsstellung in Richtung einer Instrumententafel gezogen wird.

In einer Ausführung ist die Steuereinheit ausgebildet, bei Aktivierung eines automatisierten Fahrbetriebes und/oder unmittelbar vor einer Auslösung eines Fahrerairbags die Verstelleinheit zur Positionierung des Lenkrades von der Lenkstellung in die Sicherheitsstellung zu aktivieren.

Wird das Lenkrad aufgrund der Aktivierung des automatisierten Fahrbetriebes in die Sicherheitsstellung positioniert, ragt das Lenkrad nicht mehr in einen Fahrgastraum hinein, so dass ein größerer Bewegungsfreiraum für den Fahrzeugnutzer geschaffen ist.

Wird das Lenkrad wegen einer dem Fahrzeug bevorstehenden Kollision in die Sicherheitsstellung positioniert, kann sich der dem Fahrzeugnutzer zugeordnete Fahrerairbag im Wesentlichen ungehindert frei entfalten, um seine Wirkstellung einzunehmen. Dadurch kann eine Schutzwirkung des Fahrerairbags für den Fahrzeugnutzer optimiert werden.

Durch die Vibration des Lenkrades kann sichergestellt werden, dass im Falle eines Unfallgeschehens oder kurz vor Eintritt des Unfallgeschehens veranlasst wird, dass der Fahrzeugnutzer seine Hände von dem Lenkrad löst, da ein Griff des Fahrzeugnutzers nicht ausreichend ist, das Lenkrad in der Lenkposition zu halten. Beispielsweise kann die Vibration pulsierend erfolgen.

Die Verstelleinheit umfasst in einer Ausbildung ein mit einem Elektromotor gekoppeltes Zugelement, so dass die Verstelleinheit reversibel ausgeführt ist. Dadurch kann das Lenkrad mehrmals in die Sicherheitsstellung und zurück in die Lenkstellung positioniert werden, ohne dass eine Funktion der Verstelleinheit beeinträchtigt ist.

In einer alternativen oder zusätzlichen Ausführung umfasst die Verstelleinheit ein mit einem pyrotechnischen Gasgenerator gekoppeltes Zugelement. Wird der pyrotechnische Gasgenerator ausgelöst, wirkt eine Zugkraft auf das Zugelement, insbesondere in Form eines Seiles, so dass das Lenkrad von der Lenkstellung in die Sicherheitsstellung positionierbar ist. Beispielsweise wird diese Ausführung gewählt, wenn ermittelt wird, dass dem Fahrzeug eine Kollision bevorsteht und es erforderlich ist, das Lenkrad innerhalb kürzester Zeit vor Auslösung des Fahrerairbags in die Sicherheitsstellung zu positionieren. Dadurch ist eine ungehinderte Entfaltung des Fahrerairbags weitestgehend sichergestellt.

Eine Weiterbildung der Lenkradanordnung sieht vor, dass eine Schikane und/oder eine mechanische Führung der Lenksäule relativ zu einem Mantelrohr ausgebildet sind bzw. ist, bei der Positionierung des Lenkrades von der Lenkstellung in die Sicherheitsstellung die Vibration der Lenkradanordnung, insbesondere des Lenkrades, zu erzeugen. Dadurch ist es nicht erforderlich, ein separates Funktionselement zur Erzeugung der Vibration anzuordnen. Zudem ist es nicht erforderlich Kabel, sowohl zur Übertragung eines Steuersignals als auch zur Versorgung des Funktionselementes mit elektrischer Energie, entsprechend zu verlegen.

Insbesondere sind in einer möglichen Weiterbildung an der Lenksäule und/oder an dem Mantelrohr Schikaneelemente zur Erzeugung der Vibration angeordnet und/oder ausgeformt. Dabei können die Schikaneelemente als Verzahnung zwischen Lenksäule und Mantelrohr ausgebildet sein, so dass die Lenksäule bei Positionierung des Lenkrades in die Sicherheitsstellung mit ihrer Verzahnung an der Verzahnung des Mantelrohres entlang geführt wird, wodurch das Lenkrad vibriert.

Alternativ oder zusätzlich ist in einer weiteren Ausbildung ein mit dem Lenkrad und/oder mit der Lenksäule gekoppelter Vibrationsmotor ausgebildet, die Vibration der Lenkradanordnung, insbesondere des Lenkrades, bei dessen Positionierung von der Lenkstellung in die Sicherheitsstellung erzeugen. Hierbei ist es beispielsweise möglich, sofern das Fahrzeug über einen Spurhalteassistenten verfügt, einen bereits vorhandenen Vibrationsmotor zu verwenden, mittels dessen das Lenkrad bei seiner Positionierung von der Lenkstellung in die Sicherheitsstellung vibriert, so dass der Fahrzeugnutzer seine Hände von dem Lenkrad löst.

Um in einer weiteren Ausführungsform zu ermöglichen, dass das Lenkrad unmittelbar vor der Auslösung des Fahrerairbags in die Sicherheitsstellung positioniert wird, ist die Steuereinheit mit einer Kollisionssensorik gekoppelt. Wird mittels der Kollisionssensorik ermittelt, dass dem Fahrzeug eine Kollision unmittelbar bevorsteht, übermittelt die Kollisionssensorik umgehend ein entsprechendes Signal an die Steuereinheit zur Positionierung des Lenkrades in die Sicherheitsstellung und dass das Lenkrad bei der Positionierung vibriert.

In einer alternativen oder zusätzlichen Ausführungsform ist die Steuereinheit mit einem Assistenzsystem zum automatisierten Fahrbetrieb gekoppelt, so dass die Steuereinheit ein Steuersignal bei Aktivierung des Assistenzsystems erzeugt und die Verstelleinheit entsprechend angesteuert wird, um das Lenkrad von der Lenkstellung in die Sicherheitsstellung zu positionieren.

Ausführungsbeispiele der Erfindung werden im Folgenden anhand von Zeichnungen näher erläutert.

Dabei zeigen:
- Fig. 1: schematisch einen Ausschnitt eines Fahrzeuges mit einem Fahrzeugnutzer auf einem Fahrzeugsitz,
- Fig. 2: schematisch einen vergrößerten Ausschnitt des Fahrzeuges mit dem Fahrzeugnutzer, der ein Lenkrad des Fahrzeuges festhält,
- Fig. 3: schematisch eine Lenkradanordnung mit einer Einstellvorrichtung,
- Fig. 4: schematisch eine Schnittdarstellung der Lenkradanordnung mit einem pyrotechnischen Gasgenerator und dem Lenkrad in einer Lenkstellung,
- Fig. 5: schematisch eine Schnittdarstellung der Lenkradanordnung mit dem pyrotechnischen Gasgenerator bei seiner Auslösung,
- Fig. 6: schematisch eine Schnittdarstellung der Lenkradanordnung bei einer Positionierung des vibrierenden Lenkrades in eine Sicherheitsstellung,
- Fig. 7: schematisch eine Schnittdarstellung der Lenkradanordnung mit dem vibrierenden Lenkrad bei Einnahme der Sicherheitsstellung,
- Fig. 8: schematisch eine Schnittdarstellung einer ersten weiteren Ausführungsform der Lenkradanordnung mit dem Lenkrad in der Lenkstellung,
- Fig. 9: schematisch eine Schnittdarstellung der ersten weiteren Ausführungsform der Lenkradanordnung mit vibrierendem Lenkrad bei dessen Positionierung in die Sicherheitsstellung,
- Fig. 10: schematisch eine Schnittdarstellung der ersten weiteren Ausführungsform der Lenkradanordnung mit dem vibrierenden Lenkrad bei Einnahme der Sicherheitsstellung,
- Fig. 11: schematisch eine Schnittdarstellung einer zweiten weiteren Ausführungsform der Lenkradanordnung mit dem Lenkrad in der Lenkstellung,
- Fig. 12: schematisch eine Schnittdarstellung der zweiten weiteren Ausführungsform der Lenkradanordnung mit vibrierendem Lenkrad bei dessen Positionierung in die Sicherheitsstellung und
- Fig. 13: schematisch eine Schnittdarstellung der zweiten weiteren Ausführungsform der Lenkradanordnung mit dem vibrierenden Lenkrad bei Einnahme der Sicherheitsstellung.

Einander entsprechende Teile sind in allen Figuren mit den gleichen Bezugszeichen versehen.

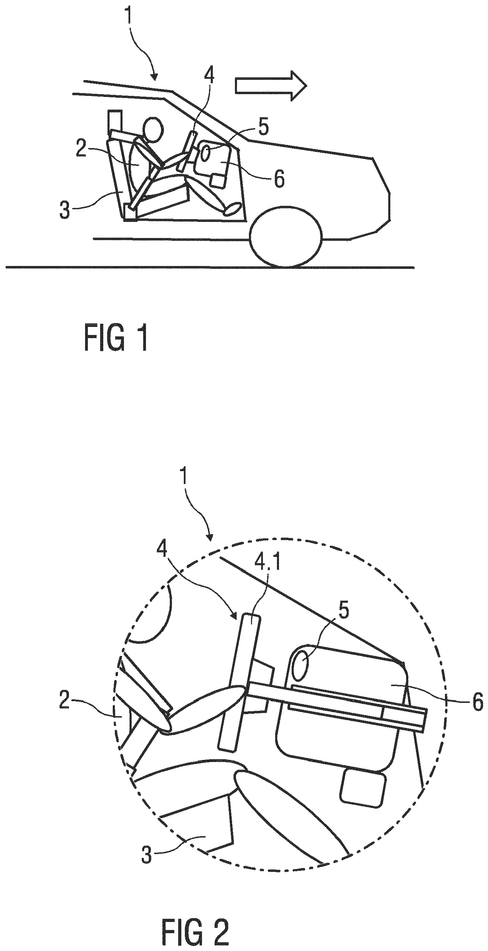

Figur 1 zeigt einen Ausschnitt eines Fahrzeuges 1 mit einem Fahrzeugnutzer 2 auf einem Fahrzeugsitz 3. In Figur 2 ist ein vergrößerter Ausschnitt des Fahrzeuges 1 mit dem Fahrzeugnutzer 2 auf dem Fahrzeugsitz 3 dargestellt. Das Fahrzeug 1 befindet sich im manuellen Fahrbetrieb und der Fahrzeugnutzer 2 hält zur Ausführung von Lenkbewegungen ein Lenkrad 4 des Fahrzeuges 1 in seinen Händen.

Im Allgemeinen ist bekannt, dass ein dem Fahrzeugnutzer 2 zugeordneter, in den Figuren 1 und 2 stark vereinfacht dargestellter Fahrerairbag 5 in das Lenkrad 4, insbesondere einen Lenkradtopf, integriert ist. Der Fahrerairbag 5 entfaltet sich somit mittig aus dem Lenkrad 4, wobei durch eine dynamische Entfaltung des Fahrerairbags 5 eine nicht näher dargestellte Airbagabdeckung aufreißt und eine Airbagaustrittsöffnung eines ebenfalls nicht näher dargestellten Gehäuses freigegeben wird. Aus dieser Airbagaustrittsöffnung entfaltet sich der Fahrerairbag 5 heraus und nimmt seine Wirkstellung ein. Dabei stützt sich der Fahrerairbag 5 zur Erzeugung einer Rückhaltekraft üblicherweise zumindest teilweise an einem Lenkradkranz 4.1 ab.

Alternativ dazu kann der Fahrerairbag 5 auch in eine Instrumententafel 6 des Fahrzeuges 1 integriert sein, aus welcher sich der Fahrerairbag 5 heraus entfaltet. Dabei entfaltet sich der Fahrerairbag 5 über das Lenkrad 4 hinweg. Gemäß dem in den Figuren 1 und 2 gezeigten Ausführungsbeispiel ist der Fahrerairbag 5 in die Instrumententafel 6 integriert.

Wiederum alternativ dazu kann der Fahrerairbag 5 an einer Unterseite der Instrumententafel 6 und/oder in einer Peripherie, z. B. in einem Dachbereich und/oder einer Innenverkleidung des Fahrzeuges 1 angeordnet sein.

Ein solches den Fahrerairbag 5 umfassendes Airbagsystem ist im Allgemeinen derart angeordnet, dass der Fahrzeugnutzer 2 mit einer Körperpositionierung für einen manuellen Fahrbetrieb bei einer Kollision des Fahrzeuges 1 mittels des Fahrerairbags 5 in seiner Wirkstellung weitestgehend geschützt ist.

Weiterhin ist im Allgemeinen bekannt, dass Fahrzeuge 1 über ein Assistenzsystem zum automatisierten Fahrbetrieb des Fahrzeuges 1 verfügen. Dabei gibt der Fahrzeugnutzer 2 seine Fahraufgabe im Wesentlichen vollumfänglich an das Fahrzeug 1, d. h. das Assistenzsystem, ab, so dass der Fahrzeugnutzer 2 eine andere Sitzposition einnehmen und einer anderweitigen Tätigkeit nachgehen kann.

Weist der Fahrzeugnutzer 2 eine andere Sitzposition auf, beispielsweise in Richtung eines nicht gezeigten Beifahrersitzes, besteht das Risiko, dass im Kollisionsfall für den Fahrzeugnutzer 2 der Fahrerairbag 5 in seiner Wirkstellung nur bedingt einen Verletzungsschutz bietet, da z. B. ein Abstand zwischen dem Fahrzeugnutzer 2 und dem Fahrerairbag 5 zu groß ist.

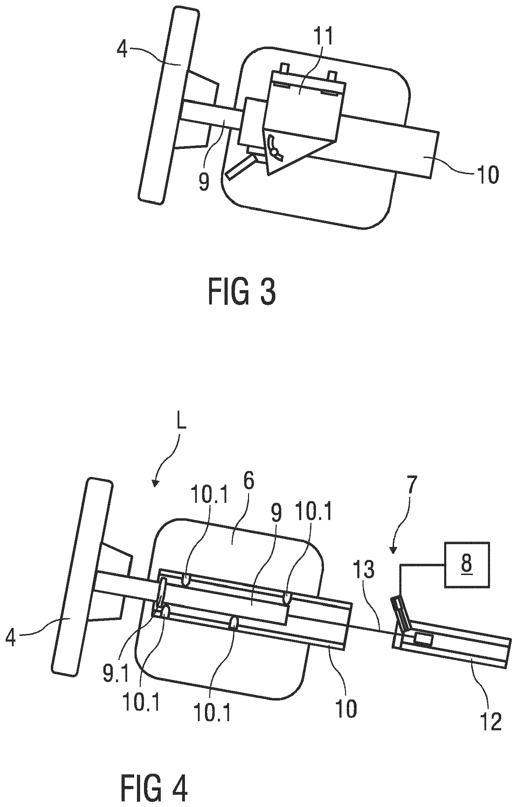

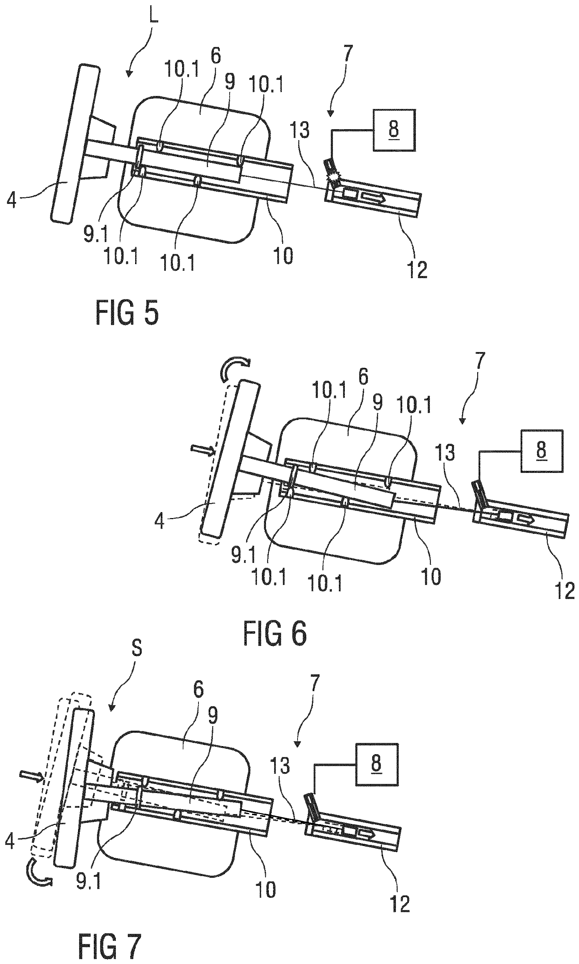

Im Folgenden werden verschiedene Ausführungsformen einer Lenkradanordnung beschrieben, welche eine Verstelleinheit 7 sowie eine Steuereinheit 8 umfasst und ausgebildet ist, das Lenkrad 4 bei Aktivierung des automatisierten Fahrbetriebes des Fahrzeuges 1 und/oder unmittelbar vor einer Auslösung des Fahrerairbags 5 von einer in den Figuren 3 bis 5, 8 und 11 gezeigten Lenkstellung L in eine in den Figuren 7, 10 und 13 gezeigte Sicherheitsstellung S zu positionieren. Darüber hinaus ist die Lenkanordnung ausgebildet, bei der Positionierung des Lenkrades 4von der Lenkstellung L in die Sicherheitsstellung S zu vibrieren.

In der Lenkstellung L ist das Lenkrad 4 in Bezug auf den Fahrzeugnutzer 2 positioniert, so dass dieser das Lenkrad 4 verhältnismäßig bequem greifen kann, um Lenkbewegungen auszuführen.

In der Sicherheitsstellung S ist das Lenkrad 4 derart positioniert, dass dieses vergleichsweise nah an der Instrumententafel 6 oder in der Instrumententafel 6 angeordnet ist. Dadurch kann sich der in die Instrumententafel 6 integrierte Fahrerairbag 5 über das Lenkrad 4 hinweg entfalten, wobei das Lenkrad 4 kein Hindernis für den sich entfaltenden Fahrerairbag 5 darstellt.

Figur 3 zeigt die Lenkanordnung mit dem Lenkrad 4, einer Lenksäule 9, an der das Lenkrad 4 befestigt ist, ein Mantelrohr 10, in welchem die Lenksäule 9 abschnittsweise verläuft, und eine Einstellvorrichtung 11. Mittels der Einstellvorrichtung 11 ist eine Verstellung des Lenkrades 4 in Verlaufsrichtung der Lenksäule 9 und des Mantelrohres 10 und eine Verstellung eines Winkels des Lenkrades 4 relativ zu dem Fahrzeugnutzer 2 möglich.

Die Figuren 4 bis 7 zeigen eine Ausführungsform der Lenkradanordnung mit der Verstelleinheit 7 zur Positionierung des Lenkrades 4 von der Lenkstellung L in die Sicherheitsstellung S.

In dieser Ausführungsform umfasst die Verstelleinheit 7 einen pyrotechnischen Gasgenerator 12 und ein Zugelement 13 in Form eines Seiles. Dabei ist ein Ende des Zugelementes 13 mit der Lenksäule 9 und ein gegenüberliegendes Ende ist mit dem Gasgenerator 12 verbunden.

Wird, insbesondere anhand erfasster Signale einer Kollisionssensorik des Fahrzeuges 1, ermittelt, dass dem Fahrzeug 1 eine Kollision bevorsteht, die einen vorgegebenen Schwellwert einer prognostizierten Kollisionsschwere überschreitet, wird ein entsprechendes Signal an die Steuereinheit 8 übermittelt, die mit der Verstelleinheit 7 gekoppelt ist.

Mittels eines daraufhin erzeugten Signals der Steuereinheit 8 wird die Verstelleinheit 7 unmittelbar vor einer Auslösung des Fahrerairbags 5 aktiviert, so dass die Lenksäule 9 mit dem Lenkrad 4 eingezogen wird.

Gemäß der in den Figuren 4 bis 7 gezeigten Ausführungsform ist die Verstelleinheit 7 irreversibel ausgeführt.

Der Gasgenerator 12 wird aufgrund des Signals der Steuereinheit 8 gezündet, wodurch eine Zugkraft auf das Zugelement 13 wirkt und das Lenkrad 4 seine Sicherheitsstellung S einnimmt. Das Lenkrad 4 wird also von dem Fahrzeugnutzer 2 wegbeschleunigt.

Zur Erzeugung der Vibration der Lenkanordnung bei der Positionierung des Lenkrades 4 in die Sicherheitsstellung S weist die Lenksäule 9 ein ringförmig ausgebildetes Führungselement 9.1 auf. An einer Innenfläche des Mantelrohres 10 sind Schikaneelemente 10.1 ausgebildet, die in einen Hohlraum des Mantelrohres 10 hineinragen.

Wird die Lenksäule 9 in das Mantelrohr 10 aufgrund der auf das Zugelement 13 wirkenden Zugkraft eingezogen, gleitet das Führungselement 9.1 an den Schikaneelementen 10.1 entlang. Dadurch vibriert die Lenksäule 9 mit dem an dieser befestigten Lenkrad 4 bei der Positionierung von der Lenkstellung L in die Sicherheitsstellung S. Die Vibration während des Einzuges ist mittels gestrichelter Linie in den Figuren 6 und 7 dargestellt.

Zusätzlich oder alternativ zu dem Gasgenerator 12 kann ein Elektromotor zur reversiblen Positionierung des Lenkrades 4 von der Lenkstellung L in die Sicherheitsstellung S vorgesehen sein. Dabei ist der Elektromotor insbesondere als Linearmotor ausgebildet und das gegenüberliegende Ende des Zugelementes 13 ist mit dem Elektromotor verbunden. Ist der Elektromotor aktiviert, erzeugt dieser die auf das Zugelement 13 wirkende Zugkraft zum Einziehen der Lenksäule 9 in das Mantelrohr 10.

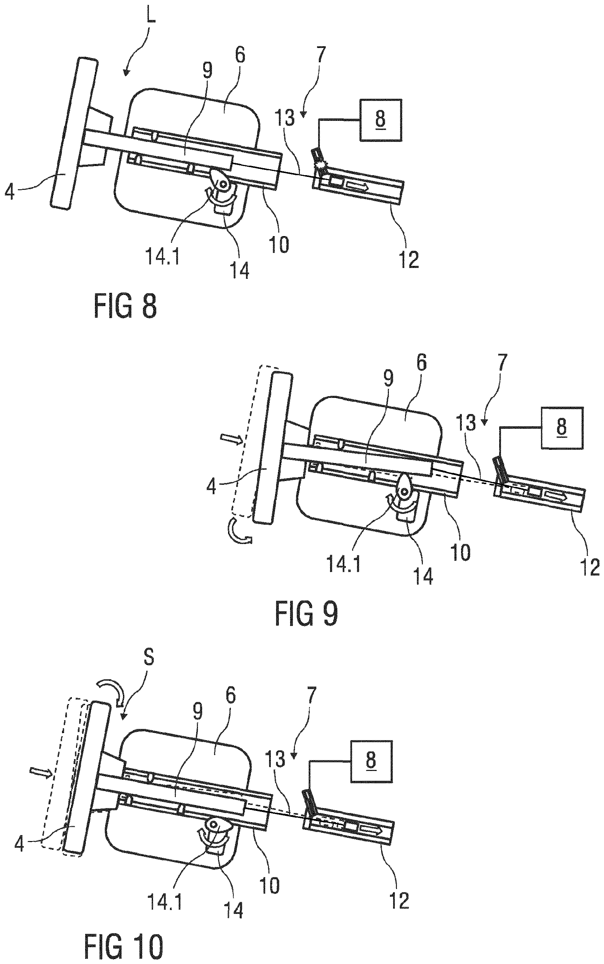

Die Figuren 8 bis 10 zeigen eine erste weitere Ausführungsform der Lenkradanordnung, wobei die Positionierung der Lenksäule 9 mit dem Lenkrad 4 ebenfalls mittels des Gasgenerators 12 und des Zugelementes 13 erfolgt.

In der ersten weiteren Ausführungsform ist ein Vibrationsmotor 14, insbesondere ein elektromotorischer Exzenter 14.1, vorgesehen, welcher die Vibration des Lenkrades 4 erzeugt. Dazu ist der Vibrationsmotor 14, insbesondere dessen Exzenter 14.1, mit der Lenksäule 9 gekoppelt. Ist der Vibrationsmotor 14 aufgrund des Signals der Steuereinheit 8 aktiviert, rotiert der Exzenter 14.1, wodurch die Lenksäule 9 und das an dieser angeordnete Lenkrad 4 vibriert. Insbesondere wird die Lenksäule 9 mittels des derart ausgebildeten Exzenters 14.1 angehoben und abgesenkt, woraus die Vibration resultiert. Auch hier ist die Vibration der Lenksäule 9 und des Lenkrades 4 mittels gestrichelter Linie dargestellt. Dieser Vibrationsmotor 14 kann beispielsweise Bestandteil eines Spurhalteassistenten des Fahrzeuges 1 sein und zur Vibration des Lenkrades 4 bei dessen Positionierung von der Lenkstellung L in die Sicherheitsstellung S verwendet werden.

Beispielsweise kann der Vibrationsmotor 14 zur Erzeugung einer haptischen Warnung aktiviert werden, bevor die Positionierung des Lenkrades 4 erfolgt.

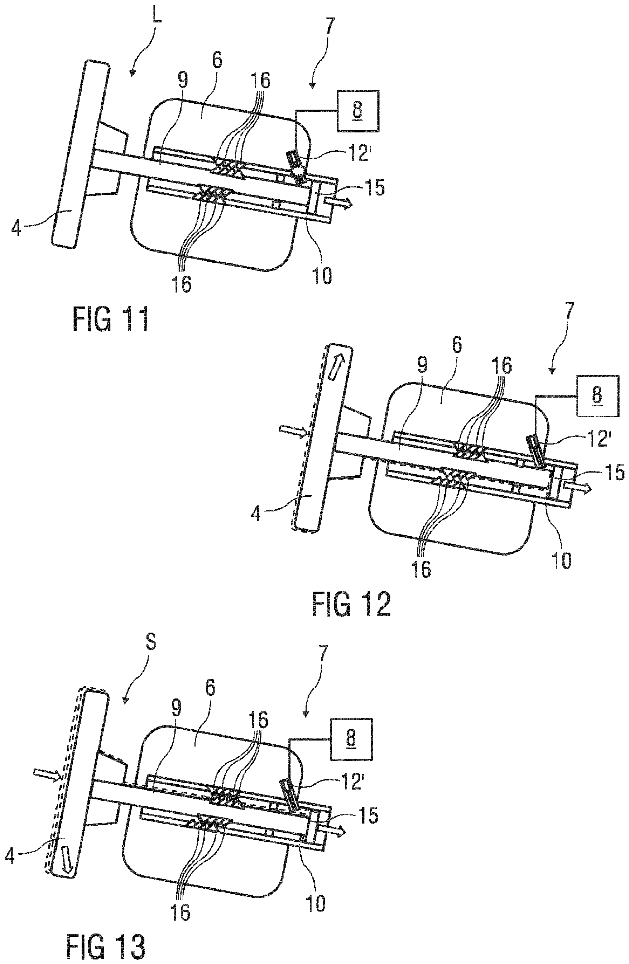

Eine zweite weitere Ausführungsform der Lenkradanordnung ist in den Figuren 11 bis 13 dargestellt.

In der zweiten weiteren Ausführungsform der Lenkradanordnung ist ein mit der Steuereinheit 8 signaltechnisch verbundener Gasgenerator 12' in das Mantelrohr 10 integriert.

An einem freien Ende der Lenksäule 9 ist ein Dichtelement 15 angeordnet, so dass das Mantelrohr 10 im Bereich der Lenksäule 9 als Druckkammer ausgebildet ist. Innerhalb dieser Druckkammer ist auch der Gasgenerator 12' angeordnet.

Wird dem Gasgenerator 12' das Signal der Steuereinheit 8 zugeführt, wird dieser gezündet, wodurch ein Gas freigesetzt wird und sich ein Druck in der Druckkammer erhöht. Durch die Zunahme des Druckes, welcher auf das Dichtelement 15 und somit auf die Lenksäule 9 wirkt, wird die Lenksäule 9 mit dem Lenkrad 4 von der Lenkstellung L in die Sicherheitsstellung S positioniert.

Zur Erzeugung der Vibration bei der Positionierung des Lenkrades 4 ist in der zweiten weiteren Ausführungsform eine ineinandergreifende Verzahnung vorgesehen. Dazu sind in einem vorgegebenen Bereich der Lenksäule 9 und in einem vorgegebenen Bereich einer Innenfläche des Mantelrohres 10 Zahnelemente 16 angeordnet oder ausgeformt, die in der Lenkstellung L ineinandergreifen.

Wird die Lenksäule 9 mit dem Lenkrad 4 eingezogen, gleiten die Zahnelemente 16 der Lenksäule 9 an den Zahnelementen 16 des Mantelrohres 10 entlang, so dass die Lenksäule 9 und das Lenkrad 4 vibrieren, wie mittels der gestrichelten Linien verdeutlich wird.

In alternativen Ausbildungen kann eine spiralförmige und/oder sägezahnförmige Führung mit ausgeformten Schikaneelementen 10.1 vorgesehen sein.

Wie oben beschrieben, kann die Positionierung des Lenkrades 4 von der Lenkstellung L in die Sicherheitsstellung S mittels pyrotechnischer Gasgeneratoren 12, 12', aber auch elektromotorisch, elektromagnetisch, pneumatisch und/oder hydraulisch erfolgen.

Denkbar ist auch, dass ein zur Positionierung erforderlicher Gasdruck über einen Bypass von einem Airbag, beispielsweise einem Knieairbag, als Bestandteil der Verstelleinheit 7 zur Verfügung gestellt wird.

## Patentansprüche

1. Fahrzeug (1) mit einer Lenkradanordnung, umfassend eine Steuereinheit (8) und ein an einer Lenksäule (9) angeordnetes, mit der Steuereinheit (8) verbundenes, von einer Lenkstellung (L) in eine Sicherheitsstellung (S) positionierbares Lenkrad (4), wobei die Lenkradanordnung eine mit der Steuereinheit (8) verbundene Verstelleinheit (7) zumindest zur Positionierung des an der Lenksäule (9) angeordneten Lenkrades (4) von der Lenkstellung (L) in die Sicherheitsstellung (S) umfasst,
**dadurch gekennzeichnet, dass** die Lenkradanordnung ausgebildet ist, bei einer Positionierung von der Lenkstellung (L) in die Sicherheitsstellung (S) zu vibrieren.

2. Fahrzeug (1) nach Anspruch 1,
**dadurch gekennzeichnet, dass** die Steuereinheit (8) ausgebildet ist, bei Aktivierung eines automatisierten Fahrbetriebes und/oder unmittelbar vor einer Auslösung eines Fahrerairbags (5) die Verstelleinheit (7) zur Positionierung des Lenkrades (4) von der Lenkstellung (L) in die Sicherheitsstellung (S) zu aktivieren.

3. Fahrzeug (1) nach Anspruch 1 oder 2,
**dadurch gekennzeichnet, dass** die Verstelleinheit (7) ein mit einem Elektromotor gekoppeltes Zugelement (13) umfasst.

4. Fahrzeug (1) nach einem der vorhergehenden Ansprüche,
**dadurch gekennzeichnet, dass** die Verstelleinheit (7) ein mit einem pyrotechnischen Gasgenerator (12, 12') gekoppeltes Zugelement (13) umfasst.

5. Fahrzeug (1) nach einem der vorhergehenden Ansprüche,
**dadurch gekennzeichnet, dass** eine Schikane und/oder eine mechanische Führung der Lenksäule (9) relativ zu einem Mantelrohr (10) ausgebildet sind bzw. ist, bei der Positionierung des Lenkrades (4) von der Lenkstellung (L) in die Sicherheitsstellung (S) die Vibration des Lenkrades (4) zu erzeugen.

6. Fahrzeug (1) nach Anspruch 5,
**dadurch gekennzeichnet, dass** an der Lenksäule (9) und/oder an dem Mantelrohr (10) Schikaneelemente (10.1) zur Erzeugung der Vibration angeordnet und/oder ausgeformt sind.

7. Fahrzeug (1) nach einem der vorhergehenden Ansprüche,
**dadurch gekennzeichnet, dass** ein mit dem Lenkrad (4) und/oder mit der Lenksäule (9) gekoppelter Vibrationsmotor (14) ausgebildet ist, die Vibration des Lenkrades (4) bei dessen Positionierung von der Lenkstellung (L) in die Sicherheitsstellung (S) zu erzeugen.

8. Fahrzeug (1) nach einem der vorhergehenden Ansprüche,
**dadurch gekennzeichnet, dass** die Steuereinheit (8) mit einer Kollisionssensorik gekoppelt ist.

9. Fahrzeug (1) nach einem der vorhergehenden Ansprüche,
**dadurch gekennzeichnet, dass** die Steuereinheit (8) mit einem Assistenzsystem zum automatisierten Fahrbetrieb gekoppelt ist.

## Claims

1. Vehicle (1) with a steering wheel arrangement, comprising a control unit (8) and a steering wheel (4) arranged on a steering column (9), connected to the control unit (8) and positionable from a steering position (L) into a safety position (S), the steering wheel arrangement comprising an adjustment unit (7) connected to the control unit (8) at least for positioning the steering wheel (4) arranged on the steering column (9) from the steering position (L) into the safety position (S),
**characterized in that** the steering wheel arrangement is designed to vibrate when positioned from the steering position (L) into the safety position (S).

2. Vehicle (1) according to claim 1,
**characterized in that** the control unit (8) is designed to activate the adjustment unit (7) for positioning the steering wheel (4) from the steering position (L) into the safety position (S) when an automated driving operation is activated and/or immediately before a driver airbag (5) is triggered.

3. Vehicle (1) according to either claim 1 or claim 2,
**characterized in that** the adjustment unit (7) comprises a tension element (13) coupled to an electric motor.

4. Vehicle (1) according to any of the preceding claims,
**characterized in that** the adjustment unit (7) comprises a tension element (13) coupled to a pyrotechnic gas generator (12, 12').

5. Vehicle (1) according to any of the preceding claims,
**characterized in that** a chicane and/or a mechanical guide of the steering column (9) relative to a casing tube (10) is or are designed to generate the vibration of the steering wheel (4) when the steering wheel (4) is positioned from the steering position (L) into the safety position (S).

6. Vehicle (1) according to claim 5,
**characterized in that** chicane elements (10.1) for generating the vibration are arranged and/or formed on the steering column (9) and/or on the casing tube (10).

7. Vehicle (1) according to any of the preceding claims,
**characterized in that** a vibration motor (14) coupled to the steering wheel (4) and/or to the steering column (9) is designed to generate the vibration of the steering wheel (4) when it is positioned from the steering position (L) into the safety position (S).

8. Vehicle (1) according to any of the preceding claims,
**characterized in that** the control unit (8) is coupled to a collision sensor system.

9. Vehicle (1) according to any of the preceding claims,
**characterized in that** the control unit (8) is coupled to an assistance system for automated driving operation.

## Revendications

1. Véhicule (1) comportant un agencement de volant de direction, comprenant une unité de commande (8) et un volant de direction (4) disposé sur une colonne de direction (9), relié à l'unité de commande (8) et pouvant être positionné d'une position de direction (L) à une position de sécurité (S), dans lequel l'agencement de volant de direction comprend une unité de réglage (7) reliée à l'unité de commande (8) au moins pour le positionnement du volant de direction (4) disposé sur la colonne de direction (9) de la position de direction (L) à la position de sécurité (S),
**caractérisé en ce que** l'agencement de volant de direction est conçu pour vibrer lors d'un positionnement de la position de direction (L) à la position de sécurité (S).

2. Véhicule (1) selon la revendication 1,
**caractérisé en ce que** l'unité de commande (8) est configurée pour activer l'unité de réglage (7) pour le positionnement du volant de direction (4) de la position de direction (L) à la position de sécurité (S) lors de l'activation d'un mode de conduite automatisé et/ou immédiatement avant un déclenchement d'un airbag conducteur (5).

3. Véhicule (1) selon la revendication 1 ou 2,
**caractérisé en ce que** l'unité de réglage (7) comprend un élément de traction (13) accouplé à un moteur électrique.

4. Véhicule (1) selon l'une des revendications précédentes,
**caractérisé en ce que** l'unité de réglage (7) comprend un élément de traction (13) accouplé à un générateur de gaz pyrotechnique (12, 12').

5. Véhicule (1) selon l'une des revendications précédentes,
**caractérisé en ce qu'**une chicane et/ou un guide mécanique de la colonne de direction (9) sont conçus par rapport à un tube d'enveloppe (10) pour générer la vibration du volant de direction (4) lors du positionnement du volant de direction (4) de la position de direction (L) à la position de sécurité (S).

6. Véhicule (1) selon la revendication 5,
**caractérisé en ce que** des éléments formant chicanes (10.1) pour la génération de la vibration sont disposés et/ou formés sur la colonne de direction (9) et/ou sur le tube d'enveloppe (10).

7. Véhicule (1) selon l'une des revendications précédentes,
**caractérisé en ce qu'**un moteur vibrant (14) accouplé au volant de direction (4) et/ou à la colonne de direction (9) est conçu pour générer la vibration du volant de direction (4) lors de son positionnement de la position de direction (L) à la position de sécurité (S).

8. Véhicule (1) selon l'une des revendications précédentes,
**caractérisé en ce que** l'unité de commande (8) est couplée à un système de capteurs de collision.

9. Véhicule (1) selon l'une des revendications précédentes,
**caractérisé en ce que** l'unité de commande (8) est couplée à un système d'assistance pour le mode de conduite automatisé.
